# EUROPEAN PATENT APPLICATION

(11) **EP 1 385 323 A1**
(43) Date of publication of application: **28.01.2004**
(21) Application number: 02078025.0
(22) Date of filing: 24.07.2002
(51) Int. Cl.: H04M 7/00, H04L 12/56, H04Q 7/38

(54) **A system, a method and apparatus for peer-to peer exchange of information**

(71) Applicant: Koninklijke KPN N.V., 9726 AE Groningen (NL)
(72) Inventor: Cordenier, Tomas Hector Andre Jozef, 2613 VS Delft (NL); Groten, Dirk, 2315 LG Leiden (NL)
(74) Representative: Wuyts, Koenraad Maria

(57) **Abstract**

The invention is about a system for exchanging information between a first terminal (1) and a second terminal (2), which may comprise a data network (3) for data transport between the first terminal (1) and the second terminal (2), a telecom network (4) for providing access to the data network (3) to the first and second terminal (2), and a signalling network (5) for signalling between the first terminal (1) and the second terminal (2), whereby the first terminal (1) has a first data network address, which can be sent to the second terminal (2) via the signalling network (5), the second terminal being arranged to establish a connection to the data network (3), thereby obtaining a second network address and send terminal (1) a message containing the second address.

## Description

### Field of the invention

The invention is about a method for exchanging information from one terminal to another terminal.
The invention is further about a system for exchanging information from one terminal to another terminal.
The invention is further about a terminal for sending information to a further terminal.
The invention is further about a terminal for receiving information from a further terminal. The invention is further about a terminal for exchanging information to another terminal.

### Background

According to the state of the art, several applications on the Internet use peer-to-peer data communication channels, to directly exchange information between parties. Some examples of applications using peer-to-peer communication channels are:
- exchange of files and documents
- chat-services
- videoconference

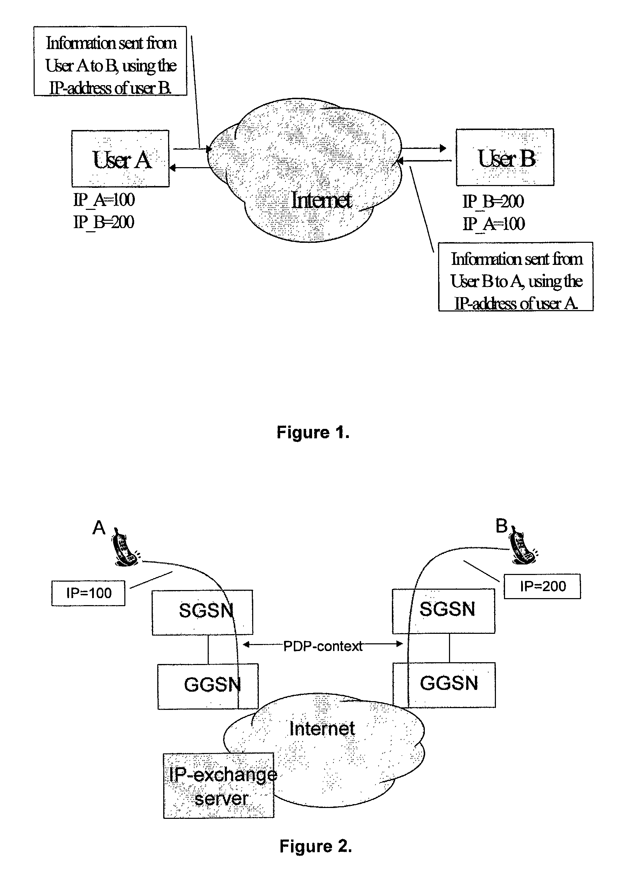

Each user needs to be connected to the Internet and should be assigned a (temporary) IP-address. In order to directly exchange information between users, it is needed that both parties know each-others IP-address. Therefore, these addresses must be exchanged in some way. After having done this, data can be addressed to the IP-address of the other party. This data will be routed through the Internet and arrive at the destination address. See for an illustration fig 1.
Fixed users may connect to the Internet using ISDN and or PSTN. An ISP connects these users to the Internet assigning each user an IP-address.
Mobile users on a GPRS network connect to the Internet by creating a PDP-context to the Internet Service Provider (ISP). Doing this, they are assigned a temporary IP address, which identifies them for the time they are online. On other mobile networks, a point-to-point communication channel is created to the ISP using various protocols, but the principle remains the same, i.e. the user receives a temporary lP address once communication channel to the Internet is made. For the following we assume both users to be mobile users without fixed IP-address assigned.

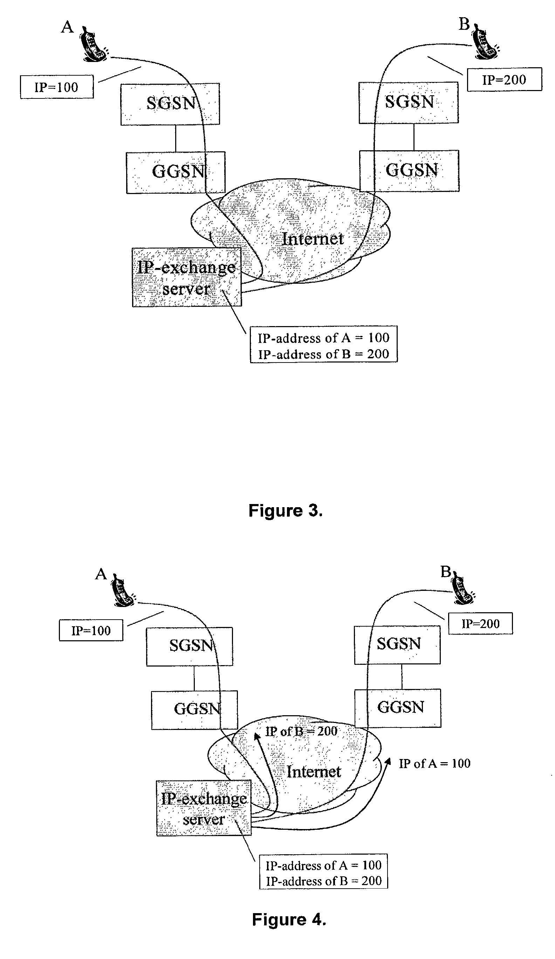

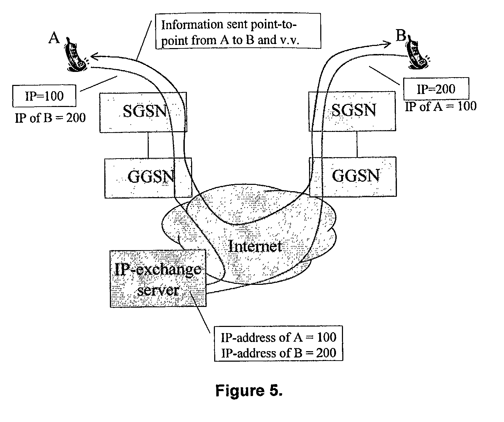

According to the state of the art, the system requires both parties to be connected to the internet and to have an IP address assigned before a peer-to-peer communication channel can be established between both parties (see Figure 2).
The exchange of IP-addresses between users takes place by an IP-exchange server. Users should log onto this server, thereby registering their temporary lP-address, which they were assigned during their Packet Data Protocol context (PDP-context) set-up, including a Serving GPRS Support Node (SGSN) and a Gateway GPRS Serving/Support Node (GGSN) (see Figure 3). Users identify themselves using a self-chosen nickname.
In this state, a user (e.g. user A) can discover that another user (e.g. user B) is online by querying the server and send a request to invite him for a session. Upon acceptance of the request, the IP-addresses of both parties are exchanged (lP-address of user A is sent to user B and v.v., see Figure 4).
Now both users can address each other using their respective IP-address. Data from user A can be sent to B, using the IP-address of B and data from user B to A can be sent using the IP-address of A. Note that the lP-exchange server is not involved anymore in this process. The data is independently routed over the Internet (see Figure 5)

To be able to exchange the IP-addresses of users, it is always necessary that both users are online to the Internet and that both users are registered at the same IP-exchange server. It therefore is not possible for a user, not being online to the Internet, to receive requests for a peer-to-peer session.

### Summary

It is an object of the invention to provide an architecture for peer-to-peer communication between a first and a second terminal using a data network, but without the need of a common exchange server in the data network.
The object of the invention is achieved in a system for exchanging information between a first and a second terminal, which may comprise a data network for data transport between the first and second terminal, a telecom network for providing access to the data network to the first and second terminal, a signalling network for signalling between the first terminal and the second terminal, wherein
the first terminal may have a first data network address, the first terminal may be arranged to send the first message containing the first network address to the second terminal via the signalling network, the second terminal may be arranged to establish a communication channel with the data network via the telecom network upon receipt of the first data network address from the first terminal, thereby obtaining a second network address, the second terminal may be arranged to send a second message containing the second data network address to the first terminal upon establishment of the communication channel with the data network, the first terminal may be arranged to send information to the second terminal via the data network upon receipt of the second message containing the second data network address from the second terminal.
In an embodiment according to the invention, the first message may comprise a command and the second terminal may be arranged to launch an application program upon receipt of the command.
This embodiment has the advantage of being able to launch the application that is best suited for displaying or showing or playing the information to be transferred from the first terminal to the second terminal.
In another embodiment according to the invention the telecom network may comprise a first sub telecom network for providing access to the data network for the first terminal and a second telecom network for providing access to the data network for the second terminal.
In yet another embodiment according the invention the signalling network may comprise a first and at least one second sub signalling network, whereby the first terminal may be connected to or communicating with the first sub signalling network and the at least one second sub signalling network may be connected to or communicate with the second sub signalling network. This has the advantage that the first and second terminal may be of a different type. The invention may also be embodied in a method for exchanging information between a first and a second terminal, whereby the method may comprise
sending a first message containing a first data network address from the first terminal to the second terminal via a signalling network, which communicates with a data network via a telecom network,
establishing a communication channel by the second terminal with the data network via the telecom network, upon receipt of the first message containing the first data network address, sending a second message containing the second data network address by the second terminal to the first terminal, upon establishment of the communication channel with the data network,
sending information from the first terminal to the second terminal via the data network, upon receipt of the second message containing the second data network address.

The invention may also be embodied in a terminal for sending information to a further terminal, which terminal may comprise
a first communication unit for communicating with a signalling network,
a second communication unit for communicating with a telecom network ,
a data entry unit, for entering information,
a processing unit, programmed for processing the information, wherein the second communication unit of operation may be arranged to provide a connection between the processing unit and a data network, the connection having a first network address, and
wherein the processing unit may be arranged for
the transmission of a first message containing the first data network address to the further terminal using the first communication unit, whereby the further terminal may be arranged to connect to the data network upon receipt of the first message and send a second message
to the terminal containing a second data network address of the further terminal,
the reception of the second message containing the second data network address of the further terminal,
the transmission of the information to the further terminal using the first communication unit, the connection to the data network and the data network address of the further terminal, upon receipt of the second message containing the second data network address of the further terminal , whereby the further terminal may be arranged to receive the information via the data network and the telecom network.

It is advantageous to have a terminal only for transmitting information to another terminal. This allows for a one-way connection between two terminals.

An embodiment of the terminal for sending information according the invention, wherein the first message also contains a command, whereby the further terminal is arranged to start an application upon receipt of the command, is advantageous because it allows the receiving terminal to start an application upon receipt of the first data network address for displaying the information without user intervention. It could also allow for user notification of the expected arrival of the information.

The invention may also be embodied in a terminal for receiving information from a further terminal, which may comprise
a first communication unit for communicating with a signalling network,
a second communication unit for communicating with a telecom network,
a processing unit, programmed for processing information,
a memory, for storing the information,
a display unit for displaying the information
wherein the processing unit may be arranged for the reception of a first data network address of the further terminal, via the first communication unit, whereby the further terminal may be arranged to send the first message containing the first data network address via the signalling network,
upon receipt of the first network address from the further terminal, the establishment of a connection to a data network using the second communication unit,
and upon the completion of the connection to the data network, whereby a second network address is supplied by the data network, the transmission of a second message containing the second data network address to the further terminal, whereby the further terminal is arranged to receive the message containing the second data network address, upon which the further terminal transmits information via the telecom network and the data network to the terminal,
the reception of the information and the display thereof in the display unit.

It is advantageous to have a terminal only for receiving information from another terminal. This allows for a one-way connection between two terminals.

An embodiment of the terminal for receiving information according the invention, wherein the first message also contains a command, wherein the further terminal may be arranged to send the first message containing a command, and
the terminal may be arranged to start an application upon receipt of the command, is advantageous because it allows the terminal to start an application upon receipt of the first data network address for displaying the information without user intervention. It could also allow for user notification of the expected arrival of the information.

The invention may also be embodied in a terminal for exchanging information with a further terminal, comprising
a first communication unit for communicating with a signalling network,
a second communication unit for communicating with a telecom network,
a processing unit, programmed for processing information,
a memory, for storing the information,
a display unit for displaying the information,
a data entry unit, for entering information,
wherein the terminal is arranged to have a transmission mode of operation, in which the terminal is arranged according to claim 20 or 21,
and wherein the terminal is arranged to have a transmission mode of operation, in which the terminal is arranged according to claim 22 or 23.

It is advantageous to have a terminal which is capable of sending and receiving information to a further terminal, because it allows for two way communication between the terminal and the further terminal.

### Brief description of drawings

Fig. 1 shows a principle of point-to-point data exchange, according to the state of the art
Fig. 2 shows an example two users connected to the Internet by a PDP-context, being assigned an IP-address, according to the state of the art.
Fig. 3 shows an example of users who register their IP-addresses on the IP-exchange server, according to the state of the art.
Fig. 4 shows an example of the exchange of IP-addresses between user A and user B, according to the state of the art.
Fig. 5 shows an example of data exchange from A to B and vice versa, whereby the IP-exchange server is not involved anymore, according to the state of the art.
Fig. 6 shows a first embodiment according to the invention.
Fig. 7 shows another embodiment according to the invention with two sub telecom networks for data transport.
Fig 8 shows a further embodiment according the invention with two sub signalling networks.

### Detailed description

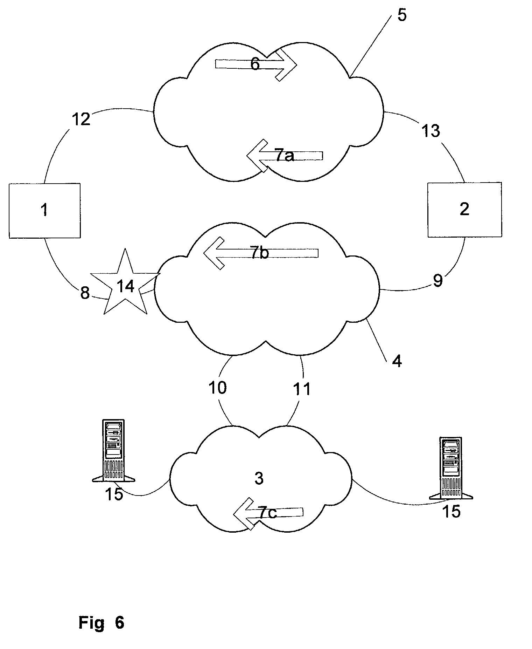

Fig 6 shows a first embodiment according to the invention.
In this embodiment a first and a second terminal 1, 2 are used for communicating between users. These terminals may comprise communication apparatus for communicating with a telecom network, memory for storing information, a processor for processing information, a display for displaying information, audio apparatus for recording and replaying audio information, video apparatus for recording and replaying video information. Such terminals may be telephones or wireless telephones, personal digital assistants, personal computers, equipped with audio and video means.
The terminals 1, 2 may be connected to a telecom network 4 via communication channels 8 and 9 respectively. Examples of such telecom networks are GPRS, UMTS, GSM, wireless LAN for wireless networks and ISDN or PSTN (Public Switched Telecommunications Network), for fixed telecom networks. The telecom network 4 may also be a combination of a mobile and a fixed network. For example in the preferred embodiment a GPRS network may connect a mobile terminal to a PSTN which connects to further destinations. The word connect is used here in the sense of providing a communication path.
The telecom network 4 provides access to a data network 3 via a first communication channel 10 and a second communication channel 11 for the first terminal 1 and the second terminal 2 respectively. Data network 3 may be at least one of the Internet, a LAN or a WAN. Servers 15 may be connected to the data network 3 for providing services and information for users using terminals like the first terminal 1 or the second terminal 2.
According to an embodiment of the invention the first and second terminal communicate with a signalling network 5, via communication channels 12 and 13. Examples of such signalling networks are GSM, wireless networks and ISDN or POTS, for fixed telecom networks.
According to the first embodiment of the invention the first terminal 1 communicates with the data network 3 via the telecom network 4 and has a first message 6 containing the first network address that may be sent to the second terminal 2 using signalling network 5.
In case of the signalling network 5 being a GSM network, the network address 7 may be sent by means of an SMS message. It may also be sent as a sub-address or as a user-to-user signal, both well known to a person skilled in the art.
In an embodiment according the invention, an SMS message is used, whereby the first message 6 containing the first network address is coded as a "hidden code".
Further embodiments using ISDN user-to-user signalling or sub-addressing using the D-channel.
The second terminal 2 is arranged to receive the first message 6 containing the first network address. Upon receipt of the first message 6 containing the first network address, the second terminal 2 is arranged to connect or log on to the data network 3, via the telecom network 4 using communication channel 9, thereby establishing communication channel 11.
Data network communication channels like the first communication channel 10 and the second communication channel 11 may be established by logging on to a server 15, whereby the server 15 is arranged to communicate a network address to the terminal that is logging on. In the case of the data network being an lP-network, the network address is an IP-number.
After logging on to the data network 3 by the second terminal 2, the second terminal may be arranged to communicate the second message containing the second network address to the first terminal 1.
In a preferred embodiment according to the invention, the second terminal may do so using the signalling network 5, whereby the second message containing the second network address 7a is sent like the first message 6 containing the first network address e.g. as an SMS message, but sub-addressing or user-to-user signalling may also apply.
In another embodiment, the second terminal 2 may be arranged to send the second message containing the second network address 7b via the telecom network 4 to the first terminal 1.
This embodiment may be a future development for GPRS or UMTS or WLAN networks. In another embodiment, the second terminal 2 may be arranged to send the second message 7c containing the second network address to the first terminal 1 via the telecom network 4 and the data network 3, using communication channels 9, 11, 10 and 8.
In a further embodiment according to the invention, the first message 6 containing the first network address may also contain a command. The second terminal 2 may be arranged to start a particular application in the terminal corresponding with the command. Such an application may be a program stored in the memory of the terminal and executable by the processor of the terminal for listening to an audio file or streaming audio, viewing a video file or streaming video, viewing a text file or "streaming text" such as in chat programs. Other applications may apply as well.
A command may for example correspond with an application identification number (ID). Well-known application IDs are e.g. already used currently in the Wireless Application Protocol (WAP) to identify which application should receive push content.

Upon receipt of the second message 7a, 7b or 7c containing the second network address of the second terminal 2 the first terminal 1 may start sending the information 14 to the second terminal 2 using the telecom network 4 and the data network 3 and the communication channels 8, 10, 11, 9, whereby the second terminal 2 may play, display or store the information 14.

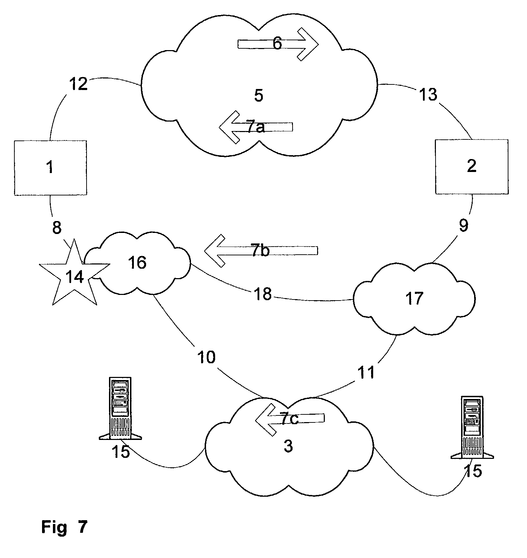

Fig 7, another embodiment according to the invention, wherein the telecom network 4 comprises a first sub telecom network 16 and a second sub telecom network 17.
In this embodiment the first terminal 1 has access to the data network 3 via the first sub telecom network 16 and the second terminal has access to the data network 3 via the second sub telecom network 17.
The first sub telecom network 16 may differ from the second telecom network 17 in that the first sub telecom network 16 may apply a different medium (radio, wired network, glass fibre or other), a different protocol or may belong to a different operator than the second sub telecom network 17. The first sub telecom network 16 may for example be a GPRS network, operated by a first operator, whereas the second sub telecom network 17 may be an ISDN network operated by a second operator.
Since data exchange may take place via telecom networks operated by different operators, it may, in the case the data network 3 is an IP-network, be necessary to route IP-traffic from the first and second terminal 1, 2 to a network address translator connected with the data network 3.

In the following sections, a preferred embodiment according to the invention will be described.
In this embodiment the signalling network 5 is a GSM signalling network and the telecom network 4 is a GPRS network.
In a GSM mobile telecom network, a Mobile Subscriber Integrated Services Digital Network (MSISDN) number uniquely identifies a mobile terminal in the signalling network 5. The invention will make use of the fact that a mobile terminal can always be found in the signalling network 5, based on the MSISDN.

Similarly a terminal connected to the PSTN, and where the PSTN is used as a signalling network may be identified by a telephone number.

The same method can be used on other types of signalling networks 5, given the fact that a terminal is identified by a unique address and such networks have signalling protocols allowing information to be sent to any terminal at any time.

To start a peer-to-peer session, it is obvious that the initiating first terminal 1 needs to have assigned an IP-address and thus must have established a Packet Data Protocol context (PDP-context).
When the second terminal 2 accepts the invitation, a PDP-context is set up and thus the second terminal 2 is assigned an IP-address; also, the requested peer-to-peer application is started on the second terminal 2. An acknowledge message 7c , including the IP-address of the second terminal 2, is sent back over the data network 3, in this case the Internet to the first terminal 1 using the IP-address of the first terminal. Note that the acknowledgement might also be sent back to the first terminal 1, using a second message 7a over the signalling network.
At this stage, both parties have obtained each other's IP-address and can start exchanging data, addressed to the respective IP-addresses (see fig. 11).
- Using the system according the preferred embodiment, it is not necessary anymore for the invited party to be online.
- An invited party can be reached at any moment, at any time.
- There is no need to be registered on a specific server.

The above-described exchange of IP-addresses using signalling messages can make use of the following standardised methods:
- The IP-address and application ID can be included in a Short Message
- The IP-address and application ID can be included in the Sub-Address of an ISUP set-up message, after which a direct ISUP release is needed.
- The IP-address and application ID can be sent using User-to-User signalling.

The invention can for example be used in the following situations:
- Instant Messaging: Chat clients on mobile devices could be used to set up a data communication channel between two mobile devices, so that users can easily exchange messages with each other. In contrast to exchanging SMS messages, this could now happen real-time, so users could see the messages as they are being typed. It also encourages users to send more data to each other (pictures, sounds, etc...) with future devices, without the need for an operator to invest in expensive infrastructure (SMSC, MMS relay, ...), still maintaining traffic revenues.
- Client-to-client push: In WAP devices, it is possible to push content to a WAP client even if that client is not online. However this can only happen from the data network 3, using intermediary servers. It is not possible for a client to push to another client unless such mobile device is configured as a server (heavy burden on a mobile device). The above-described invention allows a lightweight client-to-client push.

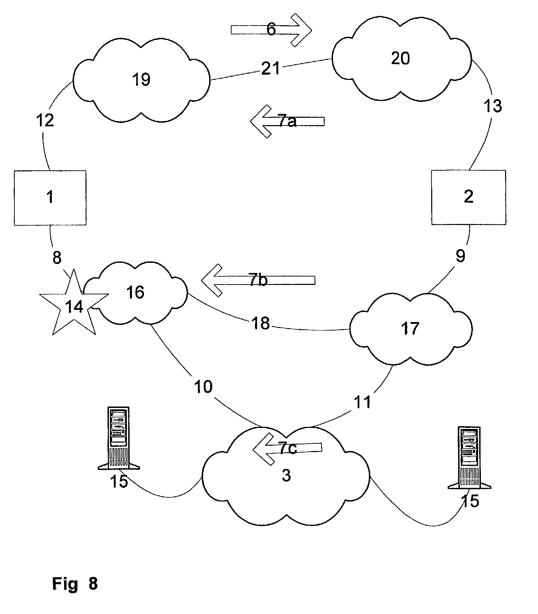

Fig 8 shows a further embodiment according the invention, whereby the signalling network 5 comprises a first 19 and at least a second sub signalling network 20.
In this embodiment, the first terminal may for example be a mobile terminal like a mobile phone using GSM or example as a signalling network, whereas the second terminal may for example be a computer with ISDN-adaptor connected to an ISDN signalling network, whereby the GSM and ISDN signalling networks are interconnected using standard interfacing means 21.
When signalling from the first terminal to the second terminal, a step of converting the signalling messages 6, 7a may be necessary between the first and the second sub signalling networks 19, 20.

A terminal used in the system for peer-to-peer exchange of information may be in a preferred embodiment according the invention a mobile phone equipped with at least two communication units for communicating with two networks. An example of such a mobile phone is one for GSM and GPRS communication. Such a mobile phone has a GSM communication unit for dialling and voice communication with other GSM mobile phones. This mobile phones also has a data communication unit for example GPRS. With this data communication unit it is possible to connect to a data network, e.g. an IP-network or the Internet. A mobile phone of this type is usually equipped with a browser for displaying data on a display and has a keyboard for dialling and for data entry, e.g. entering typed messages. A mobile phone of this type may also be equipped with a camera for filming or shooting pictures for data entry, whereby the images may be stored in a memory in the mobile phone and or transferred to the data network using the data communication unit. Other forms of data entry may also be feasible, for example voice recording, whereby sound is picked up by a microphone and stored and immediately or after a delay transmitted to another terminal.

In another embodiment a terminal may be a PDA (Personal Digital Assistant) or a laptop computer connected to a mobile phone having two communication units for communicating with a signalling network and a telecom network for data transport. The PDA or laptop is in this example used for handling information. Optionally a camera or microphone may be connected to the PDA or laptop as well. In this example it is feasible to use the invention to transfer files, including text files, presentations, etc.... from one terminal to another.
In yet another embodiment a terminal may be a personal computer or workstation, having the same functionality for information handling as a PDA or laptop computer, connected to a data network using ISDN. In this case there may be a communication unit, communicating with
the D-channel of the ISDN network, which is used for signalling or as a signalling network, and a communication unit communicating with the B-channel of the ISDN network, which is used as a telecom network for data transport.
These embodiments of terminal have in common that they are equipped with a processing unit that can be programmed for performing the functions described in this document.
A terminal according the invention may be programmed to perform sending the information to a further terminal.
A terminal according the invention may also be programmed to perform receiving the information from a further terminal.
A terminal according the invention may be programmed to perform sending and receiving the information to or from a further terminal.

Using the various terminal configurations and sub telecom networks and sub signalling networks, the invention can be used to establish for example a one-way system for transferring data, i.e. from a camera integrated in a first terminal, the first terminal connected to a data network 3 like the Internet via GPRS as a first sub telecom network 16, wherein the first terminal 1 sends a first message 6, using a GSM signalling network as a first sub signalling network 19, an ISDN signalling network as a second sub signalling network 20, to a second terminal which may be a PC connected to the ISDN signalling network. The second terminal may than log on to the Internet as the data network 3 via the ISDN data network as a second sub telecom network 17, thereby obtaining a second network address from the data network 3. The second terminal 2 may than send its second data network address to the first terminal 1 via the second sub signalling network and the first sub signalling network using a message 7a. Upon receipt of the second data network address, the terminal 1 may start sending information, in this example streaming video, to the second terminal 2 via the first sub telecom network 16, the GPRS network, the data network 3 and the sub telecom network 17, the ISDN data network.

In this example the ISDN network is interpreted of having a signalling network and a data network associated with the D-channel and the B-channels respectively.

It must be clear that the elements mentioned in the various examples in this patent application are used in particular combination, but other combinations may apply which may still be covered by the invention.

## Claims

**1.** A system for exchanging information between a first terminal (1) and a second terminal (2), comprising
• a data network (3) for data transport between the first terminal (1) and the second terminal (2),
• a telecom network (4) for providing access to the data network (3) to the first and second terminal (2),
• a signalling network (5) for signalling between the first terminal (1) and the second terminal (2),
wherein
• the first terminal (1) has a first data network address,
• the first terminal (1) is arranged to send the first message (6) containing the first network address to the second terminal (2) via the signalling network (5),
• the second terminal (2) is arranged to establish a communication channel with the data network (3) via the telecom network (4) upon receipt of the first data network address from the first terminal (1), thereby obtaining a second network address,
• the second terminal (2) is arranged to send a second message 7 containing the second data network address to the first terminal (1) upon establishment of the communication channel with the data network (3),
• the first terminal (1) is arranged to send information to the second terminal (2) via the data network (3) upon receipt of the second message 7 containing the second data network address from the second terminal (2).

**2.** The system according to claim 1, wherein
• the first message 6 comprises a command,
• the second terminal (2) is arranged to launch an application program upon receipt of the command.

**3.** The system according to claim 1 or 2, wherein
• the second terminal (2) is arranged to send the second message 7 containing the second data network address of the second terminal (2) via the signalling network (5) to the first terminal (1).

**4.** The system according to claim 1 or 2, wherein
• the second terminal (2) is arranged to send the second message (7) containing the second data network address of the second terminal (2) via the data network (3) to the first terminal (1).

**5.** The system according to any of claims 1- 4, wherein
• the telecom network (4) comprises a first sub telecom network (16) for providing access to the data network (3) for the first terminal (1) and a second telecom network (17) for providing access to the data network (3) for the second terminal (2).

**6.** The system according to any of the preceding claims, wherein
• the telecom network (4) comprises at least one of a mobile network like GSM, GPRS, UMTS or wireless LAN.

**7.** The system according to any of the preceding claims, wherein
• the data network (3) is an IP network in the form of a LAN, a WAN or the Internet or a combination of these and the first and second message (7) containing the second data network addresses are IP addresses.

**8.** The system according to any of the preceding claims, wherein
• the signalling network (5) comprises a GSM network and wherein the first and second message (7) containing the second data network addresses are both transmittable in a GSM message protocol.

**9.** The system according to claim 8, wherein
• the GSM message protocol is SMS protocol.

**10.** The system according to any of the claims 1 - 7, wherein
• the signalling network (5) comprises a first (19) and a second sub signalling network (20), whereby the first terminal communicates with the first sub signalling network and the second terminal communicates with the second signalling network and the first and the second sub signalling network are interconnected (21).

**11.** A method for exchanging information between a first and a second terminal (1,2), comprising
• sending a first message (6) containing a first data network address from the first terminal (1), which communicates with a data network (3) via a telecom network (4), to the second terminal (2) via a signalling network (5),,
• establishing a communication channel (11) by the second terminal (2) with the data network (3) via the telecom network (4), upon receipt of the first message (6) containing the first data network address,
• sending a second message containing the second data network address by the second terminal (2) to the first terminal (1), upon establishment of the communication channel (11) with the data network (3),
• sending information (14) from the first terminal (1) to the second terminal (2) via the data network (3), upon receipt of the second message (7) containing the second data network address.

**12.** The method according to claim 11, comprising
• sending the first message (6) containing the first data network address from the first terminal (1) to the second terminal (2) via a first sub signalling network (19) and a second sub signalling network,
• converting the first message (6) from a format for the first sub signalling network (19) to a format for the second sub signalling network (20).

**13.** The method according to claim 11 or 12, comprising
• sending the first message (6) containing a command,
• launching an application program upon receipt of the command by the second terminal (2).

**13.** The method according to claim 11 or 12, comprising
• sending a second message (7a) containing the second data network address from the second terminal (2) to the first terminal (1) via the signalling network (5).

**14.** The method according to any of the claims 11-13, comprising
• sending a second message (7c) containing the second data network address from the second terminal (2) to the first terminal (1) via the data network (3).

**15.** The method according to any of the claims 11 - 14, comprising
• establishing a communication channel (11) by the second terminal (2) with the data network (3) via the telecom network (4), upon receipt of the first data network address, comprises establishing a communication channel to a telecom network different from the network of the first terminal (1)

**16.** The method according to claim 15, comprising
• establishing a communication channel by the second terminal (2) with the data network (3) via at least one of a mobile network like GSM, GPRS, UMTS or wireless LAN.

**17.** The method according to any of the claims 11 - 16, comprising
• establishing a communication channel (11) by the second terminal (2) with an IP-network (3) in the form at least one of a LAN, a WAN or the Internet, via the telecom network (4), upon receipt of the first message (6) containing the first data network address, and wherein the first and second data network addresses are lP-addresses.

**18.** The method according to any of the claims 11 - 17, comprising
• sending a first message (6) in a GSM message protocol containing a first data network address from the first terminal (1) to the second terminal (2) via a GSM network (5).

**19.** The method according to claim 18, wherein
• sending a first message (6) in a SMS protocol containing a first data network address from the first terminal (1) to the second terminal (2).

**20.** A terminal (1) for sending information to a further terminal (2) for use in a system according to any one of the claims 1 - 10, comprising
• a first communication unit for communicating with a signalling network (5),
• a second communication unit for communicating with a telecom network (4),
• a data entry unit, for entering information (14),
• a processing unit, programmed for processing the information,
• wherein the second communication unit of operation is arranged to provide a connection between the processing unit and a data network (3), the connection having a first network address,
• and wherein the processing unit is arranged for
ο the transmission of a first message (6) containing the first data network address to the further terminal (2) using the first communication unit, whereby the further terminal (2) is arranged to connect to the data network (3) upon receipt of the first message and send a second message to the terminal (1) containing a second data network address of the further terminal,
ο the reception of the second message (7a, 7c) containing the second data network address of the further terminal (2),
ο the transmission of the information (14) to the further terminal (2) using the first communication unit, the connection to the data network (3) and the data network address of the further terminal (2), upon receipt of the second message (7a, 7c) containing the second data network address of the further terminal (2), whereby the further terminal (2) is arranged to receive the information (14) via the data network (3) and the telecom network (4).

**21.** The terminal according to claim 20, wherein
• the first message also contains a command, whereby the further terminal is arranged to start an application upon receipt of the command.

**22.** A terminal (2) for receiving information from a further terminal (1) for use in a system according to any one of the claims 1 - 10, comprising
• a first communication unit for communicating with a signalling network (5),
• a second communication unit for communicating with a telecom network (4),
• a processing unit, programmed for processing information,
• a memory, for storing the information,
• a display unit for displaying the information
• wherein the processing unit is arranged for
ο the reception of a first data network address of the further terminal (1), via the first communication unit, whereby the further terminal (1) is arranged to to send the first message containing the first data network address via the signalling network (4).
ο upon receipt of the first network address from the further terminal, the establishment of a connection to a data network (3) using the second communication unit,
ο and upon the completion of the connection to the data network (3), whereby a second network address is supplied by the data network (3), the transmission of a second message containing the second data network address to the further terminal (1), whereby the further terminal (1) is arranged to receive the message containing the second data network address, upon which the further terminal (1) transmits information (14) via the telecom network (4 ) and the data network (3) to the terminal (2),
ο the reception of the information (14) and the display thereof in the display unit.

**23.** A terminal according to claim 22, wherein
• the further terminal (1) is arranged to send the first message (6) containing a command,
• the terminal (2) is arranged to start an application upon receipt of the command.

**24.** A terminal for exchanging information with a further terminal for use in a system according to any one of the claims 1 - 10, comprising
• a first communication unit for communicating with a signalling network (5),
• a second communication unit for communicating with a telecom network (4),
• a processing unit, programmed for processing information,
• a memory, for storing the information,
• a display unit for displaying the information,
• a data entry unit, for entering information (14),
wherein the terminal is arranged to have a transmission mode of operation, in which the terminal is arranged according to claim 20 or 21,
and wherein the terminal is arranged to have a transmission mode of operation, in which the terminal is arranged according to claim 22 or 23.
